# EUROPÄISCHE PATENTSCHRIFT

(11) **EP 1 282 984 B1**
(45) Veröffentlichungstag und Bekanntmachung des Hinweises auf die Patenterteilung: **19.04.2006**
(21) Anmeldenummer: 01943077.6
(22) Anmeldetag: 15.05.2001
(51) Int. Cl.: H04Q 3/00, H04Q 3/545

(54) **AUSNUTZUNG EINER ORTSVERMITTLUNGSSTELLE DURCH MEHRERE ORTSNETZBETREIBER**
UTILIZATION OF A LOCAL EXCHANGE NETWORK BY A PLURALITY OF LOCAL NETWORK OPERATORS
EXPLOITATION D'UN CENTRAL TELEPHONIQUE LOCAL PAR PLUSIEURS EXPLOITANTS DE RESEAUX LOCAUX

(30) Priorität: 15.05.2000 DE 10023824
(43) Veröffentlichungstag der Anmeldung: 12.02.2003
(73) Patentinhaber: SIEMENS AKTIENGESELLSCHAFT, 80333 München (DE)
(72) Erfinder: LANTERMANN, Jürgen, 81477 München (DE)
(86) Internationale Anmeldenummer: PCT/DE2001/001835
(87) Internationale Veröffentlichungsnummer: WO 2001/089230

(56) Entgegenhaltungen:
- EP-A- 0 783 221
- EP-A- 0 817 512
- WO-A-00/44153

## Beschreibung

Die vorliegende Erfindung betrifft eine Vermittlungsstelle zum Anschluß von Telekommunikationsendgeräten an ein Telekommunikationsnetz, wie sie im Oberbegriff des beigefügten Anspruches 1 beschrieben ist, und ein Verfahren zum Betrieb einer Vermittlungsstelle, wie es im Oberbegriff des beigefügten Anspruches 12 beschrieben ist.

Nach der Deregulierung des Telekommunikationsmarktes in vielen Ländern treten immer neue Netzbetreiber am Markt auf, die zunächst als Carrier für Fernverbindungen agieren und versuchen, durch günstige Ferntarife Verkehr vom einstigen Monopolisten und von ihren Konkurrenten abzuziehen. Üblicherweise werden diese Carrier von den Endkunden für jedes Gespräch einzeln (Call-by-Call) über einen sogenannten Carrier-Access-Code angewählt. Voraussetzung für die Übernahme von Fernverkehr sind Durchleitungsverträge zwischen den neuen Netzbetreibern und dem Netzbetreiber, bei dem die Teilnehmer physikalisch angeschlossen sind, zumeist dem ehemaligen Monopolisten.

Die neuen Netzbetreiber drängen aber zunehmend auch in den Ortsbereich, und versuchen, mit festen Verträgen und lukrativen Konditionen, Endkunden fest an sich zu binden. Diese Kunden (Teilnehmer) werden dann in den Ortsvermittlungsstellen, in denen sie physikalisch angeschlossen sind, über "Preselection" fest auf den neuen Netzbetreiber eingestellt. Für diese Teilnehmer schließt der neue Netzbetreiber normalerweise Durchleitungsverträge mit den Betreibern der Ortsvermittlungsstellen ab, überläßt aber die eigentliche Steuerung der Funktionen (Dienstmerkmale) den Betreibern der Ortsvermittlungsstellen.

Möchte der neue Netzbetreiber direkt an die Teilnehmerleitungen heran, muß er sich in irgendeiner Weise zusätzlich mit dem Betreiber der Ortsvermittlungsstelle arrangieren, indem er die Teilnehmerleitungen direkt am Hauptverteiler abgreift und auf eine eigene Ortsvermittlungsstelle führt.

Das hat für einen neuen Netzbetreiber den Nachteil, daß er für seine Teilnehmer eine eigene Vermittlungsstelle im Ortsnetzbereich zur Verfügung stellen muß, was mit hohen Investitionskosten verbunden ist.

In der Druckschrift EP 0 817 512 A2 ist ein Verfahren zur Anbindung von unterschiedlichen Netzbetreibern zugeordneten Teilnehmern an Kommunikationssysteme einer Mehrzahl von Netzbetreibern beschrieben. Die Teilnehmer sind physikalisch an einer Vermittlungseinrichtung angeschlossen, jedoch werden die Signalisierungsnachrichten und Sprachinformationen derjenigen Teilnehmer, die weiteren Netzbetreibern zugeordnet sind, an jeweils die Vermittlungsstellen der weiteren Netzbetreiber transparent durchgereicht.

Die Aufgabe der vorliegenden Erfindung ist somit, eine Vermittlungsstelle gemäß dem Oberbegriff des beigefügten Anspruches 1 und ein in dieser Vermittlungsstelle angewendetes Verfahren gemäß dem Oberbegriff des beigefügten Anspruches **12** bereitzustellen, bei denen die Nutzung einer Vermittlungsstelle durch mehrere Netzbetreiber ermöglicht wird.

Diese Aufgabe wird durch eine Vermittlungsstelle gemäß dem beigefügten Anspruch 1 und ein in dieser Vermittlungsstelle angewendetes Verfahren gemäß dem beigefügten Anspruch **12** gelöst.

Gemäß der vorliegenden Erfindung wird eine technische Lösung aufgezeigt, wie es mit den heute üblichen modernen Vermittlungsstellen (z.B. im EWSD, elektronisches Wählsystem digital) erreicht wird, das eine Vermittlungsstelle (z.B. Ortsvermittlungsstelle) von mehreren Netzbetreibern genutzt werden kann.

Durch die erfindungsgemäße Zuordnung von Teilnehmern bzw. Teilnehmeranschlußleitungen zu jeweils einem Netzbetreiber ergeben sich sowohl für den Betreiber (erster Netzbetreiber) der Vermittlungsstelle als auch für die weiteren Netzbetreiber, die die Einrichtungen der Vermittlungsstelle nutzen, folgende Vorteile:

Dem Betreiber entstehen zusätzliche Einnahmequellen durch den Verkauf von Vermittlungsstellenkapazitäten und Telekommunikationsdienstleistungen.

Die Netzbetreiber, die die Kapazitäten einer Vermittlungsstelle des ersten Netzbetreibers nutzen, haben hingegen die Vorteile, daß sie weniger Investitionskosten haben, um einem Teilnehmer im Ortsnetzbereich Telekommunikationsdienstleistungen anbieten zu können, woraus sich wiederum eine frühere Rückgewinnung der Investition ergibt.

Der Kunde (Teilnehmer) hat letztendlich den Vorteil, daß er den Netzbetreiber wählen kann, der ihm den besten Preis/Service anbietet.

Vorteilhafte Ausgestaltungen der vorliegenden Erfindung sind in den jeweiligen Unteransprüchen wiedergegeben.

In einer Ausgestaltung der vorliegenden Erfindung erfolgt die Verbindung mehrerer Vermittlungsstellen über erste Zwischenamtsleitungen. Die ersten Zwischenamtsleitungen bzw. Bündel von ersten Zwischenamtsleitungen sind ebenfalls jeweils einem Netzbetreiber zugeordnet. Dabei kann entweder jeder Netzbetreiber die Telekommunikationsverbindungen seiner Teilnehmer über seine eigenen ersten Zwischenamtsleitungen abwickeln, oder, wenn er entsprechende Durchleitungsverträge mit anderen Netzbetreibern abgeschlossen hat, über die ersten Zwischenamtsleitungen der entsprechenden Netzbetreiber.

Die Telekommunikationsverbindungen zwischen zwei Teilnehmern werden, wenn die Teilnehmer an unterschiedlichen Vermittlungsstellen angeschlossen sind, über diese ersten Zwischenamtsleitungen abgewickelt. Sind die Teilnehmer jedoch an derselben Vermittlungsstelle angeschlossen, kann die Telekommunikationsverbindung auch als Internverbindung innerhalb der Vermittlungsstelle abgewickelt werden.

In einer weiteren Ausgestaltung der vorliegenden Erfindung ist die erfindungsgemäße Vermittlungsstelle über zweite Zwischenamtsleitungen mit einer Vermittlungsstelle verbunden, die als sog. Interconnect-Gateway dient. Der Interconnect-Gateway hat die Aufgabe, den Übergang einer Telekommunikationsverbindung von einem Netzbetreiber zu einem anderen Netzbetreiber zu bewerkstelligen.

Der Übergang einer Telekommunikationsverbindung von einem Netzbetreiber zu einem anderen Netzbetreiber kann aber auch innerhalb der erfindungsgemäßen Vermittlungsstelle erfolgen.

Erfindungsgemäß erfolgt die Steuerung von Funktionen, die die jeweilige Telekommunikationsverbindung betreffen, in Abhängigkeit von dem Netzbetreiber, dem der jeweilige Teilnehmer in Vermittlungsstelle zugeordnet ist. Diese Steuerung erfolgt durch eine zentrale Steuervorrichtung.

Die zentrale Steuervorrichtung steuert z.B. die Wegelenkung (das Routing) und die Gebührenerfassung (Vergebührung) in Abhängigkeit von dem Netzbetreiber, dem der jeweilige Teilnehmer in der Vermittlungsstelle zugeordnet ist.

Die zentrale Steuervorrichtung führt dabei die Steuerung der Funktionen auf Basis der Vermittlungsstellenfunktionen 'ursprungsabhängige Wegelenkung' (origination dependent routing) und 'ursprungsabhängige Verzonung' (origination dependent zoning zur Gebührenerfassung) durch.

Die erfindungsgemäße Vermittlungsstelle wird in vorteilhafter Weise vom ersten Netzbetreiber administriert. D.h., daß ein Administrator des ersten Netzbetreibers über ein Bedienterminal Zugriff auf die zentrale Steuervorrichtung der Vermittlungsstelle hat, um z.B. einen neuen Teilnehmer für einen bestimmten Netzbetreiber einzurichten. Die Administration erfolgt z.B. durch das Senden von Verwaltungskommandos (MML-Kommandos, Man-Machine-Language) an die zentrale Steuerung.

Unter 'Telekommunikation' versteht man sowohl Sprach- als auch Datenkommunikation. Als Teilnehmerleitungen werden dementsprechend beispielsweise Leitungen zum Anschluß von analogen Endgeräten (a/b-Leitungen), ISDN-Endgeräten (BA, PA-Leitungen), die entweder als Einzelanschluß oder als Mehrgeräteanschluß (z.B. Nebenstellenanlage) geschaltet werden können, Endgeräten im xDSL-Datenübertragungsverfahren oder auch Leitungen zum Anschluß von Endgeräten mit paketorientierten Datenübertragungsverfahren (z.B. H.323 Terminals) verstanden.

Die vorliegende Erfindung wird nachfolgend anhand eines bevorzugten Ausführungsbeispieles unter Bezug auf die beigefügten Zeichnungen näher erläutert, in denen zeigen:
- Fig. 1: den Aufbau der erfindungsgemäßen Vermittlungsstelle,
- Fig. 2: die beispielhafte Aufteilung einer Vermittlungsstelle mit Kennzeichnungen der Netzbetreiber, und
- Fig. 3: ein Beispiel für den Nachrichtenverkehr zwischen verschiedenen Netzbetreibern.

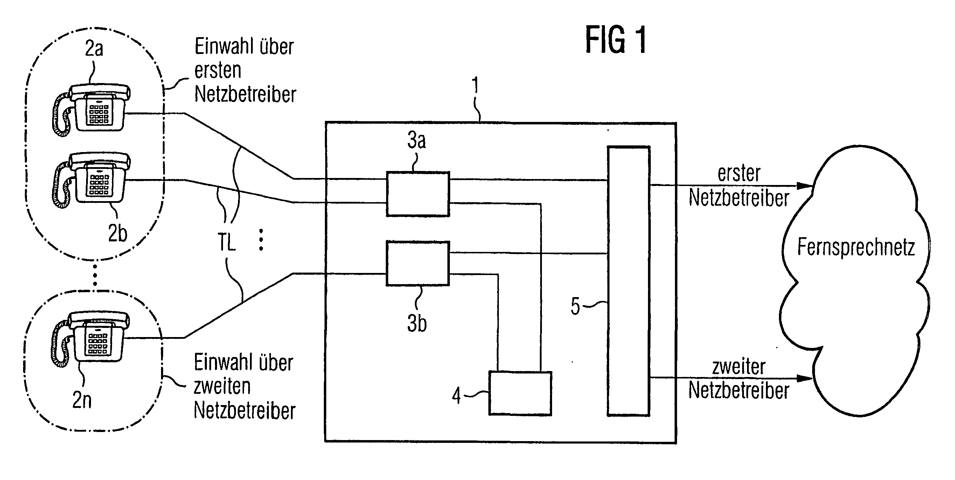

Fig. 1 zeigt ein Beispiel für eine erfindungsgemäße Vermittlungsstelle 1, die auf mehrere Netzbetreiber (im Beispiel sind es zwei) aufgeteilt ist.

Die wesentlichen Bestandteile einer Vermittlungsstelle 1 sind die Teilnehmeranschlußeinheiten (auch Linecards genannt), die die Schnittstelle zwischen den Teilnehmerleitungen (TL) und der Vermittlungsstelle bilden, das Koppelnetz 5, das die Verbindung zum Telekommunikationsnetz herstellt, und die zentrale Steuerung 4 in der die erfindungsgemäße Steuereinrichtung z.B. als Software implementiert ist. Die Telekommunikationsendgeräte 2a ... 2n der Teilnehmer sind über die Teilnehmerleitungen (TL) mit der Vermittlungsstelle 1 verbunden.

Die einzelnen Teilnehmer haben jeweils Verträge mit unterschiedlichen Netzbetreibern geschlossen, d.h. die Teilnehmer wählen sich jeweils über unterschiedliche Netzbetreiber in das Telekommunikationsnetz ein. Im Beispiel der Fig. 1 wählen sich die Teilnehmer 2a und 2b über den ersten Netzbetreiber in das Telekommunikationsnetz ein, der Teilnehmer 2n über den zweiten Netzbetreiber.

Innerhalb der Vermittlungsstelle 1 erfolgt die Steuerung der Telekommunikationsverbindung, z.B. die Wegelenkung (das Routing) und die Gebührenerfassung, in Abhängigkeit von dem Netzbetreiber, über den sich ein Teilnehmer einwählt. Wählt sich z.B. der Teilnehmer mit dem Endgerät 2a in das Telekommunikationsnetz ein, so erfolgt das Routing über das Telekommunikationsnetz bzw. die Leitungen des ersten Netzbetreibers oder des Netzbetreibers, mit dem entsprechende Durchleitungsverträge bestehen. Entsprechend werden dem Teilnehmer die Gebühren nach der Tarifstruktur des ersten Netzbetreibers in Rechnung gestellt.

Der Vorteil der vorliegenden Erfindung besteht darin, daß sie sich in moderne Vermittlungsstellen, die die Funktionen "Origination Dependent Routing" und "Origination Dependent Zoning" unterstützen, problemlos einbinden läßt.

Die Steuerung der Funktionen, die die Telekommunikationsverbindungen betreffen, wird von der zentralen Steuerung 4 durchgeführt. Eine in dieser Steuerung implementierte Software erkennt den Ursprung einer Telekommunikationsverbindung (Teilnehmer, Endgerät, Netzbetreiber) und nimmt entsprechend die Steuerung der Funktionen vor.

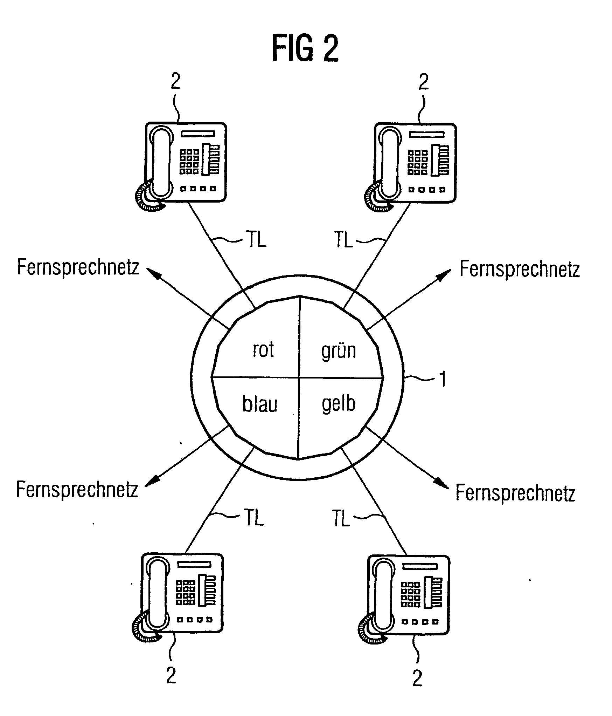

Nachfolgend wird anhand von Fig. 2 ein Beispiel gezeigt, bei dem eine Vermittlungsstelle 1 auf vier Netzbetreiber aufgeteilt wird.

In diesem Beispiel sind die Netzbetreiber zur Unterscheidung mit Farbmarkierungen versehen und in einen "roten", "grünen", "blauen" und "gelben" Netzbetreiber aufgeteilt; diese Farbaufteilung könnte z.B. bei den Teilnehmerleitungen (TL) oder den Teilnehmeranschlußeinheiten verwendet werden, um die Verbindungen zu den einzelnen Endgeräten 2 der einzelnen Netzbetreiber optisch voneinander unterscheiden zu können.

In dem gezeigten Beispiel hat jeder Netzbetreiber seine eigenen Verbindungswege (Leitungen) im Telekommunikationsnetz. Möchte z.B. ein Teilnehmer des Netzbetreibers "rot" ein Gespräch führen, so wird in der Regel das Gespräch über die Leitungen des Netzbetreibers "rot" im Telekommunikationsnetz verbunden. Ebenfalls erfolgt in diesem Beispiel die Vergebührung und die Verbindungssteuerung (call processing) entsprechend den Vorgaben des Netzbetreibers "rot".

Diese Ausführungen gelten nicht nur für einzelne Telekommunikationsendgeräte sondern auch für Nebenstellenanlagen von Teilnehmern. Eine erfindungsgemäß aufgeteilte Vermittlungsstelle bietet den Teilnehmern die gleiche Funktionalität wie eine herkömmliche Vermittlungsstelle.

Gemäß der vorliegenden Erfindung werden in dem gezeigten Beispiel die Ursprungsmarkierungen (Origination Dependent Routing und Zoning) zur Repräsentation der vier "Farben" herangezogen, als systeminterne Bezeichnungen für die vier Netzbetreiber. Diese Ursprungsmarkierungen werden durch geeignete Verwaltungskommandos in der zentralen Steuerung gesetzt, und beziehen sich, auf jeweils eine Teilnehmerleitung (TL). Jeder mögliche Ursprung einer Verbindung muß dementsprechend eine Ursprungsmarkierung tragen.

Es ist anzumerken, daß die erfindungsgemäße Aufteilung einer Vermittlungsstelle auf vier Netzbetreiber lediglich ein Beispiel darstellt; die Aufteilung der Vermittlungsstelle ist erfindungsgemäß auf eine beliebige Anzahl von Netzbetreibern möglich.

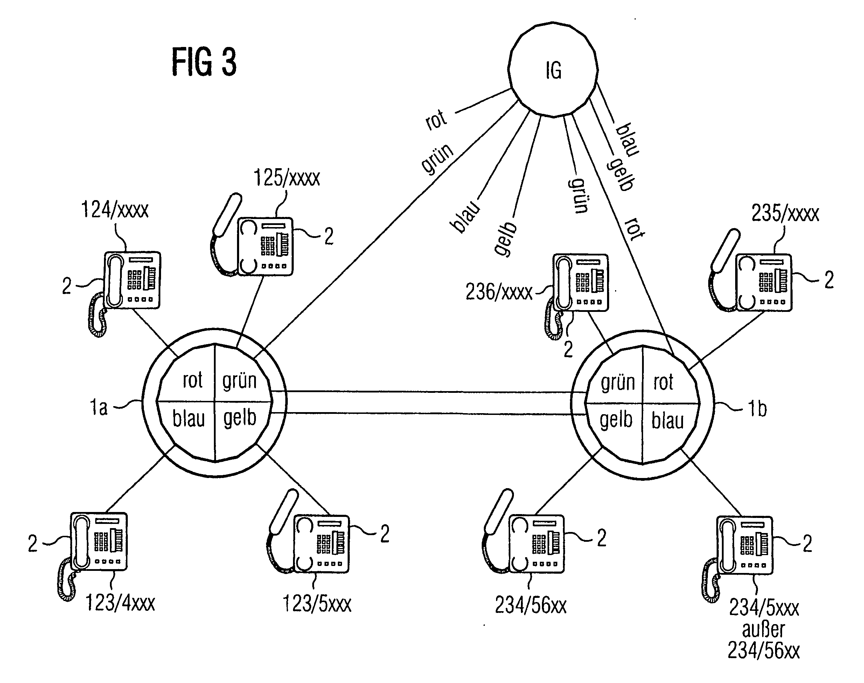

Nachfolgend wird anhand von Fig. 3 beispielhaft beschrieben, wie eine Telekommunikationsverbindung zwischen zwei Teilnehmern verbunden wird.

In dem Fall, daß zwei Teilnehmer des gleichen Netzbetreibers (z.B. "gelber" Netzbetreiber, je ein Teilnehmer an Vermittlungsstelle 1a und 1b) eine Telekommunikationsverbindung miteinander aufbauen, erfolgt die Verbindung direkt zwischen den beiden Vermittlungsstellen 1a und 1b über das Telekommunikationsnetz des "gelben" Netzbetreibers.

Erfolgt jedoch eine Telekommunikationsverbindung zwischen zwei Teilnehmern unterschiedlicher Netzbetreiber, so erfolgt die Verbindung vorteilhafterweise über einen sogenannten Interconnect Gateway IG. An dem Beispiel der Fig. 3 wird von einem Teilnehmer des "grünen" Netzbetreibers an der Vermittlungsstelle 1a eine Verbindung zu einem Teilnehmer des "roten" Netzbetreibers in der Vermittlungsstelle 1b aufgebaut. Die Verbindung verläuft dann von der Vermittlungsstelle 1a über die Leitungen des "grünen" Teilnehmers zum Interconnect Gateway IG. In dem Interconnect Gateway erfolgt der Wechsel von den Leitungen des "grünen" Netzbetreibers auf die Leitungen des "roten" Netzbetreibers. Die Verbindung erfolgt dann weiterhin über die Leitungen des "roten" Netzbetreibers zur Vermittlungsstelle 1b. Der Verbindungsweg über den Interconnect Gateway ist deshalb erforderlich, um genau feststellen zu können, von welchem Netzbetreiber die Telekommunikationsverbindung zustande kommt. Erst dann kann wiederum eine Behandlung der Verbindung bzw. der Gebühren in Abhängigkeit vom Netzbetreiber erfolgen. Für spezielle Rufnummern (wie z.B. Notrufnummern) ist es sinnvoll, eine Ursprungskennung zu vergeben, die für alle Ursprünge gültig ist. So wird gewährleistet, daß für Verbindungen von und zu solchen Rufnummern der direkte Verbindungsweg geschaltet wird.

In Fig. 3 ist außerdem die Möglichkeit dargestellt, daß den einzelnen Netzbetreibern bestimmte Nummernbereiche zugeordnet werden, z.B. wird den Teilnehmern des "blauen" Netzbetreibers an der Vermittlungsstelle 1a der Nummernbereich 124/xxx zugeordnet.

## Patentansprüche

1. Vermittlungsstelle (1) zum Anschluss von Telekommunikationsendgeräten (2a...2n) von Teilnehmern an ein Telekommunikationsnetz, mit
Teilnehmerleitungen (TL), über die die jeweiligen Telekommunikationsendgeräte (2a...2n) mit der Vermittlungsstelle (1) verbunden sind,
wobei die Vermittlungsstelle (1) von einem ersten Netzbetreiber betrieben und weiteren Netzbetreibern genutzt wird, die Teilnehmerleitungen (TL) und Teilnehmer jeweils einem dieser Netzbetreiber zugeordnet sind und die Teilnehmer mit den Telekommunikationsendgeräten (2a...2n) zum Aufbau einer Telekommunikationsverbindung über den jeweils ihnen zugeordneten Netzbetreiber die Vermittlungsstelle (1) anwählen,
**dadurch gekennzeichnet,**
**dass** eine zentrale Steuervorrichtung (4)vorgesehen ist, durch welche Funktionen, die die jeweilige Telekommunikationsverbindung betreffen, in Abhängigkeit von dem Netzbetreiber, dem der jeweilige Teilnehmer in der Vermittlungsstelle (1) zugeordnet ist, gesteuert werden.

2. Vermittlungsstelle (1) gemäß Anspruch 1,
**gekennzeichnet durch**
erste Zwischenamtsleitungen zum Verbinden der Vermittlungsstelle (1) mit weiteren Vermittlungsstellen, wobei die Zwischenamtsleitungen mehreren Netzbetreibern zugeordnet sind.

3. Vermittlungsstelle (1) gemäß Anspruch 1 oder 2,
**gekennzeichnet durch**
zweite Zwischenamtsleitungen zum Verbinden der Vermittlungsstelle (1) mit einer oder mehreren weiteren Vermittlungsstellen, die als sog. Interconnect-Gateway (IG) zum Übergang einer Telekommunikationsverbindung vom Telekommunikationsnetz eines Netzbetreibers zum Telekommunikationsnetz eines anderen Netzbetreibers dienen.

4. Vermittlungsstelle (1) gemäß Anspruch 1 oder 2,
**dadurch gekennzeichnet,**
**dass** der Übergang einer Telekommunikationsverbindung vom Telekommunikationsnetz eines Netzbetreibers zum Telekommunikationsnetz eines anderen Netzbetreibers in der Vermittlungsstelle (1) erfolgt.

5. Vermittlungsstelle (1) gemäß Anspruch 4,
**dadurch gekennzeichnet,**
**dass** die zentrale Steuervorrichtung (4) die Wegelenkung der Telekommunikationsverbindung in Abhängigkeit von dem Netzbetreiber durchführt, dem der jeweilige Teilnehmer in der Vermittlungsstelle (1) zugeordnet ist.

6. Vermittlungsstelle (1) gemäß Anspruch 4 oder 5,
**dadurch gekennzeichnet,**
**dass** die zentrale Steuervorrichtung (4) die Vergebührung der Telekommunikationsverbindung in Abhängigkeit von dem Netzbetreiber durchführt, dem der jeweilige Teilnehmer in der Vermittlungsstelle (1) zugeordnet ist.

7. Vermittlungsstelle (1) gemäß Anspruch 4, 5 oder 6,
**dadurch gekennzeichnet,**
**dass** die zentrale Steuerung (4) die Steuerung der Funktionen, die die Telekommunikationsverbindung betreffen, auf Basis der Vermittlungsstellenfunktionen 'ursprungsabhängige Wegelenkung' und 'ursprungsabhängige Verzonung' durchführt.

8. Vermittlungsstelle (1) gemäß einem der Ansprüche 1 bis 7,
**dadurch gekennzeichnet,**
**dass** die Teilnehmerleitungen (TL) zum Anschluss von analogen Telekommunikationsendgeräten (2a...2n) dienen.

9. Vermittlungsstelle (1) gemäß einem der Ansprüche 1 bis 7,
**dadurch gekennzeichnet,**
**dass** die Teilnehmerleitungen (TL) zum Anschluss von ISDN-Telekommunikationsendgeräten (2a...2n) dienen.

10. Vermittlungsstelle (1) gemäß einem der Ansprüche 1 bis 7,
**dadurch gekennzeichnet,**
**dass** die Teilnehmerleitungen (TL) zum Anschluss von Telekommunikationsendgeräten (2a...2n) zur Datenübertragung im xDSL-Übertragungsverfahren dienen.

11. Vermittlungsstelle (1) gemäß einem der Ansprüche 1 bis 7,
**dadurch gekennzeichnet,**
**dass** die Teilnehmerleitungen (TL) zum Anschluss von Telekommunikationsendgeräten mit paketorientierten Übertragungsverfahren dienen.

12. Verfahren zum Betrieb einer Vermittlungsstelle (1) zum Anschluss von Telekommunikationsendgeräten (2a...2n) von Teilnehmern an ein Telekommunikationsnetz, mit Teilnehmerleitungen (TL), über die die jeweiligen Telekommunikationsendgeräte (2a...2n) mit der Vermittlungsstelle (1) verbunden sind,
wobei die Vermittlungsstelle (1) von einem ersten Netzbetreiber betrieben und weiteren Netzbetreibern genutzt wird, die Teilnehmerleitungen (TL) und Teilnehmer jeweils einem dieser Netzbetreiber zugeordnet sind und die Teilnehmer mit den Telekommunikationsendgeräten (2a...2n) zum Aufbau einer Telekommunikationsverbindung über den jeweils ihnen zugeordneten Netzbetreiber die Vermittlungsstelle (1) anwählen
**dadurch gekennzeichnet,**
**dass** Funktionen, die die jeweilige Telekommunikationsverbindung betreffen, in Abhängigkeit von dem Netzbetreiber gesteuert werden, dem der jeweilige Teilnehmer in der Vermittlungsstelle (1) zugeordnet ist.

13. Verfahren gemäß Anspruch 12,
**dadurch gekennzeichnet,**
**dass** die Wegelenkung der Telekommunikationsverbindung in Abhängigkeit von dem Netzbetreiber durchgeführt wird, dem der jeweilige Teilnehmer in der Vermittlungsstelle (1) zugeordnet ist.

14. Verfahren gemäß Anspruch 12 oder 13,
**dadurch gekennzeichnet,**
**dass** die Vergebührung der Telekommunikationsverbindung in Abhängigkeit von dem Netzbetreiber durchgeführt wird, dem der jeweilige Teilnehmer in der Vermittlungsstelle (1) zugeordnet ist.

15. Verfahren gemäß Anspruch 12, 13 oder 14,
**dadurch gekennzeichnet,**
**dass** die die Steuerung der Funktionen, die die Telekommunikationsverbindung betreffen, auf Basis der Vermittlungsstellenfunktionen 'ursprungsabhängige Wegelenkung' und 'ursprungsabhängige Verzonung' durchgeführt wird.

16. Verfahren gemäß einem der Ansprüche 12 bis 15,
**dadurch gekennzeichnet,**
**dass** die Vermittlungsstelle (1) vom ersten Netzbetreiber administriert wird.

17. Verfahren gemäß einem der Ansprüche 12 bis 16,
**dadurch gekennzeichnet,**
**dass** der Übergang einer Telekommunikationsverbindung vom Telekommunikationsnetz eines Netzbetreibers zum Telekommunikationsnetz eines anderen Netzbetreibers in der Vermittlungsstelle (1) erfolgt.

18. Verfahren gemäß einem der Ansprüche 12 bis 16,
**dadurch gekennzeichnet,**
**dass** der Übergang einer Telekommunikationsverbindung vom Telekommunikationsnetz eines Netzbetreibers zum Telekommunikationsnetz eines anderen Netzbetreibers über eine weitere Vermittlungsstelle erfolgt.

## Revendications

1. Central téléphonique (1) pour raccorder des terminaux de télécommunications (2a ... 2n) d'abonnés à un réseau de télécommunications, avec
des lignes d'abonnés (TL) par l'intermédiaire desquelles les terminaux de télécommunications respectifs (2a ... 2n) sont reliés au central téléphonique (1),
le central téléphonique (1) étant exploité par un premier exploitant de réseau et utilisé par d'autres exploitants de réseaux, les lignes d'abonnés (TL) et abonnés étant respectivement affectés à l'un de ces exploitants de réseaux et les abonnés avec les terminaux de télécommunications (2a ... 2n) appelant le central téléphonique (1) pour établir une connexion de télécommunications par l'intermédiaire de l'exploitant de réseau qui leur est respectivement affecté,
**caractérisé en ce**
**qu'**un dispositif de commande central (4) est prévu, par lequel sont commandées des fonctions qui concernent la connexion de télécommunications respective en fonction de l'exploitant de réseau auquel est affecté l'abonné respectif dans le central téléphonique (1).

2. Central téléphonique (1) selon la revendication 1,
**caractérisé par**
des premières lignes inter-réseaux pour connecter le central téléphonique (1) à d'autres centraux téléphoniques, les lignes inter-réseaux étant affectées à plusieurs exploitants de réseaux.

3. Central téléphonique (1) selon la revendication 1 ou 2,
**caractérisé par**
des deuxièmes lignes inter-réseaux pour connecter le central téléphonique (1) à un ou plusieurs autres centraux téléphoniques qui, en tant que ce qu'on appelle une Interconnect Gateway (IG), servent au passage d'une connexion de télécommunications du réseau de télécommunications d'un exploitant de réseau au réseau de télécommunications d'un autre exploitant de réseau.

4. Central téléphonique (1) selon la revendication 1 ou 2,
**caractérisé en ce**
**que** le passage d'une connexion de télécommunications du réseau de télécommunications d'un exploitant de réseau au réseau de télécommunications d'un autre exploitant de réseau se produit dans le central téléphonique (1).

5. Central téléphonique (1) selon la revendication 4,
**caractérisé en ce**
**que** le dispositif de commande central (4) effectue le routage de la connexion de télécommunications en fonction de l'exploitant de réseau auquel est affecté l'abonné respectif dans le central téléphonique (1).

6. Central téléphonique (1) selon la revendication 4 ou 5,
**caractérisé en ce**
**que** le dispositif de commande central (4) effectue la facturation de la connexion de télécommunications en fonction de l'exploitant de réseau auquel est affecté l'abonné respectif dans le central téléphonique (1).

7. Central téléphonique (1) selon la revendication 4, 5 ou 6,
**caractérisé en ce**
**que** le dispositif de commande central (4) exécute la commande des fonctions qui concernent la connexion de télécommunications sur la base des fonctions du central téléphonique «routage en fonction de la source» et «zonage en fonction de la source».

8. Central téléphonique (1) selon l'une des revendications 1 à 7,
**caractérisé en ce**
**que** les lignes d'abonnés (TL) servent à raccorder des terminaux de télécommunications analogiques (2a ... 2n).

9. Central téléphonique (1) selon l'une des revendications 1 à 7,
**caractérisé en ce**
**que** les lignes d'abonnés (TL) servent à raccorder des terminaux de télécommunications ISDN (2a ... 2n).

10. Central téléphonique (1) selon l'une des revendications 1 à 7,
**caractérisé en ce**
**que** les lignes d'abonnés (TL) servent à raccorder des terminaux de télécommunications (2a ... 2n) pour la transmission de données dans le procédé de transmission xDSL.

11. Central téléphonique (1) selon l'une des revendications 1 à 7,
**caractérisé en ce**
**que** les lignes d'abonnés (TL) servent à raccorder des terminaux de télécommunications avec des procédés de transmission orientés paquets.

12. Procédé d'exploitation d'un central téléphonique (1) pour raccorder des terminaux de télécommunications (2a ... 2n) d'abonnés à un réseau de télécommunications, avec
des lignes d'abonnés (TL) par l'intermédiaire desquelles les terminaux de télécommunications respectifs (2a ... 2n) sont reliés au central téléphonique (1),
le central téléphonique (1) étant exploité par un premier exploitant de réseau et utilisé par d'autres exploitants de réseaux, les lignes d'abonnés (TL) et abonnés étant respectivement affectés à l'un de ces exploitants de réseaux et les abonnés avec les terminaux de télécommunications (2a ... 2n) appelant le central téléphonique (1) pour établir une connexion de télécommunications par l'intermédiaire de l'exploitant de réseau qui leur est respectivement affecté,
**caractérisé en ce**
**que** des fonctions qui concernent la connexion de télécommunications respective sont commandées en fonction de l'exploitant de réseau auquel est affecté l'abonné respectif dans le central téléphonique (1).

13. Procédé selon la revendication 12,
**caractérisé en ce**
**que** le routage de la connexion de télécommunications est effectué en fonction de l'exploitant de réseau auquel est affecté l'abonné respectif dans le central téléphonique (1).

14. Procédé selon la revendication 12 ou 13,
**caractérisé en ce**
**que** la facturation de la connexion de télécommunications est effectuée en fonction de l'exploitant de réseau auquel est affecté l'abonné respectif dans le central téléphonique (1).

15. Procédé selon la revendication 12, 13 ou 14,
**caractérisé en ce**
**que** la commande des fonctions qui concernent la connexion de télécommunications est exécutée sur la base des fonctions du central téléphonique «routage en fonction de la source» et «zonage en fonction de la source».

16. Procédé selon l'une des revendications 12 à 15,
**caractérisé en ce**
**que** le central téléphonique (1) est administré par le premier exploitant de réseau.

17. Procédé selon l'une des revendications 12 à 16,
**caractérisé en ce**
**que** le passage d'une connexion de télécommunications du réseau de télécommunications d'un exploitant de réseau au réseau de télécommunications d'un autre exploitant de réseau se produit dans le central téléphonique (1).

18. Procédé selon l'une des revendications 12 à 16,
**caractérisé en ce**
**que** le passage d'une connexion de télécommunications du réseau de télécommunications d'un exploitant de réseau au réseau de télécommunications d'un autre exploitant de réseau se produit par l'intermédiaire d'un autre central téléphonique.

## Claims

1. Exchange (1) for connecting telecommunications terminals (2a...2n) of subscribers to a telecommunications network, having
subscriber lines (TL) via which the respective telecommunications terminals (2a...2n) are connected to the exchange (1),
the exchange (1) being operated by a first network operator and used by further network operators, each subscriber line (TL) and each subscriber being assigned to one of said network operators and the subscribers in each case dialling the exchange (1) via the respective network operator assigned to them with the telecommunications terminals (2a...2n) in order to set up a telecommunications connection,
**characterised in that**
a central control device (4) is provided by means of which functions relating to the respective telecommunications connection are controlled as a function of the network operator to which the respective subscriber is assigned in the exchange (1).

2. Exchange (1) according to claim 1,
**characterised by**
first interexchange lines for connecting the exchange (1) to further exchanges, the interexchange lines being assigned to a plurality of network operators.

3. Exchange (1) according to claim 1 or 2,
**characterised by**
second interexchange lines for connecting the exchange (1) to one or more further exchanges which serve as what is termed an interconnect gateway (IG) to allow the transition of a telecommunications connection from the telecommunications network of one network operator to the telecommunications network of another network operator.

4. Exchange (1) according to claim 1 or 2,
**characterised in that**
the transition of a telecommunications connection from the telecommunications network of one network operator to the telecommunications network of another network operator takes place in the exchange (1).

5. Exchange (1) according to claim 4,
**characterised by**
the central control device (4) handles the routing of the telecommunications connection as a function of the network operator to which the respective subscriber is assigned in the exchange (1).

6. Exchange (1) according to claim 4 or 5,
**characterised in that**
the central control device (4) handles the billing of the telecommunications connection as a function of the network operator to which the respective subscriber is assigned in the exchange (1).

7. Exchange (1) according to claim 4, 5 or 6,
**characterised in that**
the central controller (4) handles the control of the functions relating to the telecommunications connection based on the exchange functions "origination dependent routing" and "origination dependent zoning".

8. Exchange (1) according to one of the claims 1 to 7,
**characterised in that**
the subscriber lines (TL) serve to connect analogue telecommunications terminals (2a...2n).

9. Exchange (1) according to one of the claims 1 to 7,
**characterised in that**
the subscriber lines (TL) serve to connect ISDN telecommunications terminals (2a...2n).

10. Exchange (1) according to one of the claims 1 to 7,
**characterised in that**
the subscriber lines (TL) serve to connect telecommunications terminals (2a...2n) for data transmission using the xDSL transmission method.

11. Exchange (1) according to one of the claims 1 to 7,
**characterised in that**
the subscriber lines (TL) serve to connect telecommunications terminals using packet-oriented transmission methods.

12. Method for operating an exchange (1) for connecting telecommunications terminals (2a...2n) of subscribers to a telecommunications network, having
subscriber lines (TL) via which the respective telecommunications terminals (2a...2n) are connected to the exchange (1),
the exchange (1) being operated by a first network operator and used by further network operators, each subscriber line (TL) and each subscriber being assigned to one of said network operators and the subscribers in each case dialling the exchange (1) via the respective network operator assigned to them with the telecommunications terminals (2a...2n) in order to set up a telecommunications connection,
**characterised in that**
functions relating to the respective telecommunications connection are controlled as a function of the network operator to which the respective subscriber is assigned in the exchange (1).

13. Method according to claim 12,
**characterised in that**
the routing of the telecommunications connection is carried out as a function of the network operator to which the respective subscriber is assigned in the exchange (1).

14. Method according to claim 12 or 13,
**characterised in that**
the billing of the telecommunications connection is carried out as a function of the network operator to which the respective subscriber is assigned in the exchange (1).

15. Method according to claim 12, 13 or 14,
**characterised in that**
the functions relating to the telecommunications connection are controlled on the basis of the exchange functions "origination dependent routing" and "origination dependent zoning".

16. Method according to one of the claims 12 to 15,
**characterised in that**
the exchange (1) is administered by the first network operator.

17. Method according to one of the claims 12 to 16,
**characterised in that**
the transition of a telecommunications connection from the telecommunications network of one network operator to the telecommunications network of another network operator takes place in the exchange (1).

18. Method according to one of the claims 12 to 16,
**characterised in that**
the transition of a telecommunications connection from the telecommunications network of one network operator to the telecommunications network of another network operator takes place via a further exchange.
